Europäisches Patentamt

European Patent Office

Office européen des brevets

(11) Publication number: **0 214 858 B1**

# EUROPEAN PATENT SPECIFICATION

(45) Date of publication of patent specification: **22.04.92**   (51) Int. Cl.⁵: **C08J 9/10**, C08L 23/06

(21) Application number: **86306896.1**

(22) Date of filing: **05.09.86**

(54) **Open-cell foam materials.**

(30) Priority: **06.09.85 JP 198099/85**
**17.09.85 JP 205795/85**

(43) Date of publication of application:
**18.03.87 Bulletin 87/12**

(45) Publication of the grant of the patent:
**22.04.92 Bulletin 92/17**

(84) Designated Contracting States:
**BE GB IT**

(56) References cited:
**BE-A- 887 441**
**GB-A- 1 300 262**
**GB-A- 1 554 147**

(73) Proprietor: **KABUSHIKI KAISHA SERUTEKUNO**
**12-10 Teradaamatsuka**
**Joyo 610-01 Kyoto(JP)**

(72) Inventor: **Ito, Hiroo**
**12-10 Teradaamatsuka**
**Joyo 610-01 Kyoto(JP)**

(74) Representative: **Hayward, Denis Edward Peter**
**et al**
**Lloyd Wise, Tregear & Co. Norman House**
**105-109 Strand**
**London WC2R 0AE(GB)**

EP 0 214 858 B1

## Description

This invention relates to a method of producing polyethylene or ethylene copolymer open-cell foam materials which are high-expansive or ultra-high-expansive materials with an expansion ratio of at least 25 times, and which have an open-cell ratio from 96 to 100%.

A conventional method of dealing with the production of polyethylene or ethylene copolymer open-cell foam materials is described in Japanese Patent Publication No. SHO. 59-23545 (hereafter referred to as the conventional method). This conventional method includes essentially three process steps: a first step in which a composition containing a foaming agent and a bridging agent is heated under pressure for a fixed period of time, thus forming a bridged first intermediate product in which the decomposition ratio of the foaming agent is 30% or less; a second step in which the remaining foaming agent and bridging agent are decomposed under atmospheric pressure to form a second intermediate product having easily ruptured closed cells; and a third step in which the second intermediate product is mechanically pressed within a temperature range of about 0 to 40°C in order to rupture the closed cells and achieve a product with up to 95% open cells.

It has, however, been discovered that if the foaming agent is allowed to decompose to any substantial extent during the first step of heating under pressure, as is the case in the conventional method, cells are formed in the body of the composition at this time which have comparatively thick strong cell membranes and these are not easily ruptured by the mechanical pressing in the final step. By keeping the temperature in the first step below the conventionally-employed level one can largely prevent the decomposition of the foaming agent at this stage. In this connection, BE-A-887441 proposed a temperature range in the first step of 125 - 160°C, and a temperature range in the second step of 145 - 210°C, and the foaming agent was said to be still in a non-decomposed state at the end of the first step. However despite that, a problem remains in regard to achieving 100% open cells in the final product, the highest figure claimed in the prior patent specification just mentioned being only 96%, with 95.8% as the best figure obtained in the Examples given in that patent.

It is therefore an object of the invention to achieve a method for the production of polyethylene or ethylene copolymer open-cell foam materials in which the final product has an ultra-high expansion ratio of 25 times or more and an open cell ratio of virtually 100%.

According to the present invention, there is provided a method of producing polyethylene open-cell foam materials wherein a starting composition comprising a base compound, consisting of polyethylene or a copolymer of polyethylene, in admixture with a foaming agent, especially azodicarbonamide, a bridging agent, such as dicumyl peroxide, and optionally a foaming assist agent is heated under pressure in a first step to produce a first intermediate product, the first intermediate product is then heated to a higher temperature under normal atmospheric pressure in a second step to produce a second intermediate product which is a foam with closed cells, and then the walls of the cells of the second intermediate product are ruptured by mechanical pressing to produce an open-cell foam product, characterised in that the first step of heating under pressure is performed at a temperature in the range having a lower limit of 110°C but not exceeding 135°C whereby substantial decomposition of the foaming agent is avoided, the second step of heating under atmospheric pressure is performed at a temperature in the range of 150 to 190°C to achieve substantially complete decomposition of the foaming agent, and sufficient foaming agent, together with foaming assist agent if required, is included in the starting composition to obtain an overall cubic expansion coefficient of at least 25 times with the proviso that in the case of an expansion of 45 times upwards no foaming assist agent is employed and within the expansion range of 25 to 45 times the foaming assist agent added (such as 0.01 to 0.1 parts by weight in the case of zinc oxide or 0.03 to 0.45 parts by weight in the case of zinc stearate) is insufficient to result in an expansion during the first step of heating under pressure of greater than 1.0 to 2.0 times: thereby to achieve substantially 100% open cells in the foam product. Optionally and preferably there is added to the starting composition a quantity of a high-melting point resin powder with a melting point of at least 140°C such that it does not melt until the second step of heating at higher temperature under atmospheric pressure is reached.

The aim is to substantially prevent decomposition of the foaming agent until the second step of heating at higher temperature under atmospheric pressure is reached and then to promote as complete a decomposition of the foaming agent as possible. To this end, the inventor has discovered that, contrary to the indications in the prior art, the temperature in the first step of heating under pressure should be no more than 135°C and furthermore the use of foaming assist agent should be carefully regulated to ensure that the pressure of it, or of too much of it, does not result in premature foaming.

If a high-melting point resin is included in the starting composition it may be added in an amount of 5 - 30 parts by weight to 100 parts by weight of the polyethylene or polyethylene copolymer base compound.

Another preferred addition is an inorganic filler, the amount added being 5 - 30 parts by weight, more preferably 10 - 20 parts by weight.

The following is a description in more detail of ways of working in accordance with the invention.

The polyethylene or a copolymer of polyethylene forming the base compound of the starting composition for the foam can comprise, in addition to low-density polyethylene, ethylene vinyl acetate copolymer, chlorinated polyethylene, ethylene acrylate ester copolymer, ethylene propylene copolymer, ethylene butane copolymer, etc.

In the examples to be described, the foaming agent used is an azodicarbonamide foaming agent.

In order to obtain an ultra-high-expansive material with an expansion ratio of 45 times or more, an azodicarbonamide foaming agent is added at a ratio of 30 parts or more by weight to 100 parts by weight of the base resin (for example, for a product with an expansion ratio of 50 times, 35 parts by weight of the foaming agent is added). In this case a foaming assist agent is not used.

The reason for not adding a foaming assist agent to the base compound is that, because the azodicarbonamide foaming agent has a heat-generating reaction during decomposition, if, as explained above, large amounts of a foaming agent are added in order to obtain an expansion ratio of 45 times or more, decomposition is automatically stimulated by the heat generated during decomposition. However, the further speeding up of decomposition through the addition of a foaming assist agent will invite such problems as the premature collapse of the cell membranes, thus making it impossible to obtain a high-quality product.

On the other hand, if the objective is to produce a material with an expansion ratio of 25 to 45 times, a very small amount of metal oxide, high-grade fatty acid metallic salt, high-grade fatty acid ammonium salt, or urea compound, or a combination of more than one of these, is added as a foaming assist agent. The reason for adding a foaming assist agent to the base compound in this case is that, because there is less heat accumulated from the heat generated during decomposition of the lesser amount of foaming agent used for a ratio of 25 to 45 times, if the foaming assist agent is not added, there will be insufficient expansion. Specifically, for an expansion ratio of 25 to 45 times, an azodicarbonamide foaming agent is added at a ratio of 14 to 30 parts by weight to 100 parts by weight of the base resin, and if zinc oxide (including activated zinc oxide) is used alone as the foaming assist agent, the addition of 0.05 to 0.1 parts by weight (for an expansion ratio of 25 to 30 times) or 0.01 to 0.05 parts by weight (for an expansion ratio of 40 times) is appropriate.

Also, if zinc stearate is used alone as the foaming assist agent, the addition of 0.03 to 0.45 parts by weight is appropriate. The additives should be mixed into the base compound by using a mixing roller or a pressurized kneader at a temperature at which decomposition of the base compound will not take place.

As already indicated, the heating temperature in the pressurized heating process is 110 to 135°C. If the temperature were lower than 110°C, there would be too little bridging reaction thus increasing the chances of contraction, folding, and other problems occurring during the rupture of the cell membranes in the following procedure. The foaming compound would then not be formed in the shape of the mold, and the surface of the product would be pitted and uneven.

On the other hand, if the temperature were higher than 135°C, the coefficient of cubic expansion (expansion ratio) could easily exceed 2.0 times and the bridging reaction would then advance to a higher level, thus making the final interconnection of the cells more difficult. The allowable range of heating time for this process is 15 to 60 minutes, and the ideal range is 20 to 40 minutes. In addition, a pressure of at least 3 kg/cm$^2$ is best for reasons of formability and thermal conductivity.

For the bridging agent, in addition to dicumyl peroxide, it is also possible to use 2,5 dimethyl-2,5 ditertiarybutyl-peroxyhexane, 2.5-dimethyl-2.5 ditertiarybutyl-peroxyhexine, $\alpha,\alpha$-ditertiarybutyl-peroxydiisopropyl benzene, etc.

In the second step carried out under atmospheric pressure, the primary intermediate product is heated to a range of 150-190°C during the foaming process, since the foaming agent will not decompose completely at a temperature lower than 150°C, and, conversely, the decomposition of the foaming agent will speed up too much at a temperature higher than 190°C and cause problems to occur.

Furthermore, in the third process step of mechanically pressing the secondary intermediate product in order to rupture and interconnect the cells, it is sufficient to simply compress the product a few times. Doing this will readily provide a product with an open-cell ratio of substantially 100%.

A preferred feature of the process is the addition to the starting composition of a high-melting-point resin powder with a melting point of 140°C or higher. This high-melting-point resin powder can be crystalline polypropylene, polycarbonate, polyamide, polyimide, polyethylene phthalate, etc.

The reason for the addition of this high-melting-point resin powder to the base compound is to form ultra-thin cell membranes in the base compound through the difference in viscosity. This high-melting-point resin powder does not melt during the first step of the process in which the first intermediate product is obtained, so the bridging reaction proceeds only for the base resin. At the foaming stage in the next step of the process, the high-melting point resin powder is softened or melted, and the difference in viscosity between the base resin and this melted resin powder causes ultra-thin cell membranes to be formed at the locations of high-melting point resin, thus making it easier to achieve the final interconnection of the cells through mechanical compression. If the added resin powder were to have a melting point not high enough to prevent it melting during the mixing of the starting composition or during the pressurized heating first step of the process from which the primary intermediate product is obtained, the desired result would not be obtained.

The possible range for addition of the high-melting-point resin powder to the base resin is 5 to 30 parts by weight, the preferred range being 10 to 20 parts by weight. If the amount added exceeds 30 parts by weight, the possibility of collapse of the cells during the foaming process increases, and if the amount added is less than 5 parts by weight it is ineffective.

If, during the first step of heating under pressure, a pressure is used that is high enough to cause the composition to be extruded out between the upper and lower halves of the mold, such as a pressure of at least 3 $kg/cm^2$, a primary intermediate product with a coarse cell structure can be readily obtained.

The reason for keeping the coefficient of cubic expansion in the pressurized heating step of the process to no more than 2.0 times is that if the coefficient of cubic expansion exceeds 2.0 times, the pressurized condition will cause the gas generated by decomposition to be dispersed uniformly, thus causing strong cell membranes to be formed and making it difficult to interconnect the cells by mechanical compression in the final step.

In addition, by appropriately setting the heating time and heating temperature for the first step of the process so that the coefficient of cubic expansion is within the range of 1.0 to 2.0 times, it is possible to regulate the diameter of the cells in the product. In other words, if heating is performed for a long time at a high temperature, cell nuclei will be formed in the primary intermediate product and the resulting cell structure will be fine; conversely, if the time is short and the temperature is low, the cell structure will be coarse even under pressure.

In order to produce thick foam materials with a high expansion ratio of 30 times or more, the slow decomposition of the foaming agent is extremely important. In other words, although the same is true for methods for the production of closed cell foam materials, if the decomposition of the foaming agent occurs too quickly, the expansion of the resin will not be able to keep up with the quick foaming action, thus causing cavities to be formed inside the product, cracking to occur, and other problems, consequently greatly reducing product quality. In addition, slight variations in temperature, etc., would make it impossible to guarantee complete reproducibility.

It is desirable to add an inorganic filler to the starting composition. The reason for the addition of this filler is not a cost measure but rather to allow the decomposition of the foaming agent to be regulated. Although it is unclear just how the inorganic filler acts upon the foaming agent, it is confirmed that the addition of the filler is effective in improving the thermal conductivity of the primary intermediate product and delaying the decomposition of the foaming agent. Thus, in comparison to when the inorganic filler is not added, there is more uniform expansion with less chance of localized excessive expansion, so the occurrence of problems is greatly reduced.

In particular, because the thermal conductivity of the base resin is poor, it would usually require a considerable length of time to evenly heat thick foam material right through to the center. However, by adding an inorganic filler with good thermal conductivity, the time required for heating is shortened, and there is less difference in the diameter of the cells between those in the center and those nearer the surface. This greater uniformity is considered to be the result of the improved thermal conductivity and the slower decomposition of the foaming agent.

Furthermore, because the inorganic filler also functions as nuclei of the cells, more uniform cells can be obtained than when the filler is not added.

Specifically, the inorganic filler used can be a carbonate such as calcium carbonate or magnesium carbonate, a metal oxide such as titanium oxide, calcium oxide, or magnesium oxide, or a filler material used for rubber, such as talc, clay, or mica. Although the amount added can range from 5 to 30 parts by weight, the ideal range is 10 to 20 parts by weight. If the amount added exceeds 30 parts by weight, the physical properties of the base resin will be adversely affected; if the amount added is less than 5 parts by weight, the desired effect will not be achieved.

In the following Examples, the open cell ratio of the products was measured by the Air Picno Meter Method (ASTM D2856).

EXAMPLE 1

A composition consisting of an ethylene vinyl acetate copolymer (brandname: EVAFLEX P-1403, manufactured by Mitsui Polychemical Co. containing 14% by weight vinyl acetate)(EVAFLEX is a Registered Trade Mark), 18 parts by weight of an azodicarbonimide foaming agent, 0.03 parts by weight of activated zinc oxide, and 0.75 parts by weight of dicumyl peroxide was mixed using a mixing roller which had been heated to 95°C. This mixed starting composition was then poured into a mold (internal dimensions: 30 x 350 x 700 mm) inside a press which had been heated to 128°C, and heated for 35 minutes under a pressure of 6 kg/cm$^2$ in order to obtain the primary intermediate product.

The primary intermediate product thus obtained had a coefficient of cubic expansion of 1.6 times with respect to the mold inside the press. Next, this primary intermediate product was placed in a heating container (internal dimensions: 95 x 1100 x 2100 mm) which had been heated to 160°C, heated for 130 minutes, and then cooled in room-temperature water in order to obtain the secondary intermediate product.

The secondary intermediate product thus obtained was then fed four times through constant-speed rollers with the roller spacing set to 15 mm in order to rupture the cell membranes and obtain an open-cell foam product.

The product thus obtained was a high quality open-cell material with an excellent external appearance, a thickness of 86 mm, an apparent density of 0.030 g/cc (expansion ratio of 31 times), and, as measured in accordance with the Air Picno Meter Method (ASTM D2856), an open-cell ratio of 100%.

EXAMPLE 2

A composition consisting of 100 parts by weight of the same resin used for Example 1, 23 parts by weight of an azodicarbonamide foaming agent, 0.01 parts by weight of activated zinc oxide, and 0.72 parts by weight of dicumyl peroxide was mixed using the same method as for Example 1, and then poured into a mold (internal dimensions: 28 x 330 x 660 mm) inside a press which had been heated to 125°C, and heated for 40 minutes under a pressure of 7 kg/cm$^2$ in order to obtain a primary intermediate product with a coefficient of cubic expansion of 1.6 times.

The primary intermediate product was then heated, expanded, and cooled under the same conditions as Example 1. After the foam material was thus obtained, the cells were interconnected using the same method as for Example 1.

The resulting product was a high-quality open-cell material with a thickness of 84 mm, an apparent density of 0.025 g/cc (expansion ratio of 37 times), and an open cell ratio of 100%.

EXAMPLE 3

A composition consisting of 100 parts by weight of an ethylene vinyl acetate copolymer (brandname: ULTRATHENE UE630; containing 15% by weight vinyl acetate) (ULTRATHENE is a Registered Trade Mark), 35 parts by weight of an azodicarbonamide foaming agent (ADCA), and 0.55 parts by weight of dicumyl peroxide (DCP) was mixed using the same method as for Example 1, and then poured into a mold (internal dimensions: 20 x 200 x 200 mm) inside a press which had been heated to 125°C, and heated for 30 minutes under a pressure of 10 kg/cm$^2$ in order to obtain a primary intermediate product with a coefficient of cubic expansion of 1.2 times.

Next, this primary intermediate product was placed in a heating container (internal dimensions: 95 x 600 x 600 mm) which had been heated to 175°C, heated for 90 minutes, and then cooled in order to obtain the secondary intermediate product (foam material). After the foam material was thus obtained, the cells were interconnected using the same method as for Example 1. The resulting product was a ultra-high-expansive open-cell material with a thickness of 82 mm, an open cell ratio of 100%, and an apparent density of 0.019 g/cc (expansion ratio of 50 times).

COMPARISON TEST 1

This Test was carried out to demonstrate the effect of raising the temperature during the first step of heating under pressure. The same composition as for Example 1 was processed according to the same conditions as for Example 1 in order to obtain the foam material, with the exception that the press temperature in the first step was set to 140°C. After the pressurized heating in the press, the expansion ratio of the primary intermediate product was 3.0 times. When the foam material thus obtained was then passed through the rollers in the same way as for Example 1 in order to interconnect the cells, the open cell ratio was a low 55%, and the product obtained had severe deformation with a thickness contracted by the rollers to approximately 70 mm.

COMPARISON TEST 2

This Test was carried out to demonstrate the effect of adding too much foam assist agent. The same procedure was carried out as in Example 1, except that the amount of activated zinc oxide added as a foaming assist agent was increased to 0.2 parts by weight. After the pressurized heating in the press, the expansion ratio of the primary intermediate product was 3.0 times. The foam material thus obtained had already contracted to a thickness of 75 mm and many cracks had appeared in the surface.

Next, when this foam material was passed through the rollers in the same way as for Example 1 in order to interconnect the cells, the open cell ratio was 80%. The contraction of the foam material and the appearance of cracks in the surface can be attributed to the too rapid decomposition of the foaming agent.

## EXAMPLE 4

A composition consisting of 100 parts by weight of an ethylene vinyl acetate copolymer (brandname: ULTRATHENE UE63O, containing 15% by weight vinyl acetate), 15 parts by weight of polycarbonate powder (brandname: Yupiron S-2000, permeable through 100 mesh sieve), 18 parts by weight of ADCA (azodicarbonamide foaming agent), 0.04 parts by weight of activated zinc oxide as a foaming assist agent, 0.8 parts by weight of DCP (dicumyl peroxide) bridging agent, and 10 parts by weight of heavy calcium carbonate was mixed using a mixing roller which had been heated to 95°C. This mixed starting composition was then poured into a mold (internal dimensions: 30 x 350 x 700 mm) inside a press which had been heated to 130°C, and heated for 40 minutes under a pressure of 5 kg/cm$^2$ in order to obtain the primary intermediate product.

The primary intermediate product thus obtained had a coefficient of cubic expansion of 1.1 times with respect to the mold inside the press. Next, this primary intermediate product was placed in a heating container (internal dimensions: 95 x 1100 x 2100 mm) which had been heated to 160°C, heated for 130 minutes, and then cooled in room-temperature water in order to obtain the secondary intermediate product.

The secondary intermediate product thus obtained was then fed three times through a pair of constant-speed rollers at room temperature with the roller spacing set to 15 mm in order to rupture the cell membranes and obtain an open-cell foam product.

The product thus obtained was a high-quality open-cell material with an excellent external appearance, a thickness of 85 mm, an apparent density of 0.030 g/cc (expansion ratio of 31 times), and, as measured in accordance with the Air Picno Meter Method (ASTM D2856), an open cell ratio of 100%.

## EXAMPLE 5

A composition consisting of 100 parts by weight of an ethylene vinyl acetate copolymer (brandname: EVAFLEX P-1403, manufactured by Mitsui Polychemical Co., containing 14% by weight vinyl acetate), 15 parts by weight of crystalline polypropylene powder (brandname: NOVATEC P8 100J; permeable through 100 mesh sieve) (NOVATEC is a Registered Trade Mark), 22 parts by weight of ADCA, 0.02 parts by weight of activated zinc oxide as a foaming assist agent, 0.8 parts by weight of DCP, and 15 parts by weight of heavy calcium carbonate was mixed using the same method as for Example 4, and then poured into a mold (internal dimensions: 28 x 330 x 660 mm) inside a press which had been heated to 128°C, and heated for 40 minutes under a pressure of 5 kg/cm$^2$ in order to obtain a primary intermediate product with a coefficient of cubic expansion of 1.3 times.

The primary intermediate product was then heated, expanded, and cooled under the same conditions as Example 4. After the foam material was thus obtained, the cells were interconnected by passing the foam material through constant-speed rollers in the same way as for Example 4.

The resulting product was a high-quality open-cell material with a thickness of 83 mm, an apparent density of 0.025 g/cc (expansion ratio of 37 times), and an open cell ratio of 100%.

## EXAMPLE 6

A foaming composition consisting of 100 parts by weight of the same resin as used for Example 4, 10 parts by weight of polycarbonate powder (brandname: Yupiron S-2000, permeable through 100 mesh sieve), 30 parts by weight of ADCA (azodicarbonamide foaming agent), 0.6 parts by weight of DCP, and 15 parts by weight of heavy calcium carbonate was mixed using the same method as for Example 4, and then poured into a mold (internal dimensions: 20 x 200 x 200 mm) inside a press which had been heated to 125°C, and heated for 30 minutes under a pressure of 5 kg/cm$^2$ in order to obtain a primary intermediate product with a coefficient of cubic expansion of 1.2 times.

Next, this primary intermediate product was placed in a heating container (internal dimensions: 95 x 600 x 600 mm) which had been heated to 175°C, heated for 90 minutes, and then cooled in order to obtain the secondary intermediate product (foam material). After the foam material was thus obtained, the cells were interconnected using the same method as for Example 4. The resulting product was an ultra-high-expansive open-cell material with a thickness of 82 mm, an open-cell ratio of 100%, and an apparent density of 0.019 g/cc (expansion ratio of 50 times).

COMPARISON TEST 3

This was a further Test to show the effect of too high a temperature in the first step. The same composition as for Example 4 was processed according to the same regime as for Example 4 in order to obtain the foam material, with the exception that the press temperature in the first step was set to 140°C. The expansion ratio of the primary intermediate product thus obtained was 2.5 times, the thickness of the foam material was 92 mm, and there were no problems with the external appearance. Finally, when the cells of the foam material were interconnected in the same way as for Example 4, the open cell ratio was 60%, and the product thickness had contracted to 75 mm.

COMPARISON TEST 4

A further Test to show the effect of overdosing with foaming assist agent. The same procedure was carried out as in Example 4, except that the amount of activated zinc oxide was increased to 0.2 parts by weight. After the presurized heating, the expansion ratio of the primary intermediate product was 3.5 times. The foam material thus obtained had already contracted to a thickness of 75 mm and many cracks had appeared in the surface.

Next, when this foam material was passed through the rollers in the same way as for Example 4 in order to interconnect the cells, the open cell ratio was 85%. The contraction of the foam material and the appearance of cracks in the surface can be attributed to the sudden decomposition of the foaming agent during the foaming process.

Since the compression recovery, water absorption and permeability of products obtained by methods according to the invention are superior to those of previously available open-cell foam materials, which contained some closed cells, present products can be expected to be used in applications which make use of these physical properties.

**Claims**

1. A method of producing polyethylene open-cell foam materials wherein a starting composition comprising a base compound, consisting of polyethylene or a copolymer of polyethylene, in admixture with a foaming agent, especially azodicarbonamide, a bridging agent, such as dicumyl peroxide, and optionally a foaming assist agent is heated under pressure in a first step to produce a first intermediate product, the first intermediate product is then heated to a higher temperature under normal atmospheric pressure in a second step to produce a second intermediate product which is a foam with closed cells, and then the walls of the cells of the second intermediate product are ruptured by mechanical pressing to produce an open-cell foam product, characterised in that the first step of heating under pressure is performed at a temperature in the range having a lower limit of 110°C but not exceeding 135°C whereby substantial decomposition of the foaming agent is avoided, the second step of heating under atmospheric pressure is performed at a temperature in the range of 150 to 190°C to achieve substantially complete decomposition of the foaming agent, and sufficient foaming agent, together with foaming assist agent if required, is included in the starting composition to obtain an overall cubic expansion coefficient of at least 25 times with the proviso that in the case of an expansion of 45 times upwards no foaming assist agent is employed and within the expansion range of 25 to 45 times the foaming assist agent added (such as 0.01 to 0.1 parts by weight in the case of zinc oxide or 0.03 to 0.45 parts by weight in the case of zinc stearate) is insufficient to result in an expansion during the first step of heating under pressure of greater than 1.0 to 2.0 times; thereby to achieve substantially 100% open cells in the foam product.

2. A method according to Claim 1, wherein there is added to the starting composition a quantity of a high-melting point resin powder with a melting point of at least 140°C such that it does not melt until the second step of heating at higher temperature under atmospheric pressure is reached.

3. A method according to Claim 2, wherein said high-melting point resin is added in an amount of 5 - 30 parts by weight to 100 parts by weight of the polyethylene or polyethylene copolymer base compound.

4. A method according to Claim 1 or Claim 2 or Claim 3, wherein an inorganic filler is added to the starting composition.

5. A method according to Claim 4, wherein the amount of inorganic filler added is 5 - 30 parts by weight, more preferably 10 - 20 parts by weight.

6. A method according to any preceding claim, wherein the cubic expansion coefficient is in the range 25 - 45 times and 0.01 to 0.1 parts by weight of zinc oxide is added as a foaming assist agent.

7.  A method according to any of Claims 1 to 5, wherein the cubic expansion coefficient is in the range 25 - 45 times and 0.03 - 0.45 parts by weight of zinc stearate is added as a foaming assist agent.

## Revendications

1.  Procédé de production de matières expansées ou mousses à cellules ouvertes, en polyéthylène, conformément auquel on chauffe une composition de départ comprenant un composé de base, constitué de polyéthylène ou d'un copolymère du polyéthylène, en mélange à un agent porogène, plus particulièrement l'azodicarbonamide, un agent de pontage, comme le peroxyde de dicumyle et éventuellement un agent facilitant l'expansion ou moussage, sous pression et au cours d'une première étape, de manière à former un premier produit intermédiaire, puis on chauffe le premier produit intermédiaire jusqu'à une température supérieure à la pression atmosphérique normale, au cours d'une seconde étape, pour former un second produit intermédiaire qui est une mousse ou matière expansée à cellules fermées et on provoque ensuite la rupture des parois des cellules du second produit intermédiaire par une compression mécanique pour former un produit expansé ou mousse à cellules ouvertes, caractérisé en ce que l'on réalise la première étape de chauffage sous pression à une température qui varie dans une plage qui comporte une limite inférieure de 110°C mais qui n'excède pas 135°C, en sorte que l'on évite une décomposition substantielle de l'agent porogène, on réalise la seconde étape de chauffage à la pression atmopshérique à une température qui varie de 150 à 190°C pour parvenir à une décomposition sensiblement totale de l'agent porogène et on englobe suffisamment d'agent porogène, en même temps que d'agent favorisant l'expansion ou moussage si cela se révèle nécessaire, dans la composition de départ pour obtenir un coefficient de dilatation ou d'expansion cubique global d'au moins 25 fois, avec la condition que, dans le cas d'une expansion allant jusqu'à 45 fois, on n'utilise pas d'agent facilitant le moussage ou l'expansion et que dans la plage d'expansion ou de dilatation de 25 à 45 fois, la proportion d'agent facilitant le moussage ou l'expansion ajoutée (comme 0,01 à 0,1 partie en poids dans le cas de l'oxyde de zinc, ou 0,03 à 0,45 partie en poids dans le cas du stéarate de zinc) soit insuffisante pour entraîner une dilatation ou expansion au cours de la première étape de chauffage sous pression supérieure à 1,0 à 2,0 fois, en une manière telle que l'on obtiennent sensiblement 100% de cellules ouvertes dans le produit expansé ou mousse.

2.  Procédé suivant la revendication 1, caractérisé en ce que l'on ajoute à la composition de départ une quantité d'une poudre de résine à point de fusion élevé, possédant un point de fusion d'au moins 140°C, en une manière telle qu'elle ne fonde pas jusqu'à ce que la seconde étape de chauffage à température supérieure et à la pression atmosphérique soit atteinte.

3.  Procédé suivant la revendication 2, caractérisé en ce que l'on ajoute ladite résine à point de fusion élevé en une proportion de 5 à 30 parties en poids pour 100 parties en poids du composé de base du type polyéthylène ou copolymère de polyéthylène.

4.  Procédé suivant la revendication 1 ou la revendication 2 ou la revendication 3, caractérisé en ce que l'on ajoute une charge inorganique à la composition de départ.

5.  Procédé suivant la revendication 4, caractérisé en ce que la proportion de charge inorganique ajoutée varie de 5 à 30 parties en poids, plus avantageusement 10 à 20 parties en poids.

6.  Procédé suivant l'une quelconque des revendications précédentes, caractérisé en ce que le coefficient d'expansion ou dilatation cubique varie dans la plage de 25 à 45 fois et l'on ajoute de 0,01 à 0,1 partie en poids d'oxyde de zinc à titre d'agent facilitant l'expansion ou le moussage.

7.  Procédé suivant l'une quelconque des revendications 1 à 5, caractérisé en ce que le coefficient d'expansion ou dilatation cubique varie dans la plage de 25 à 45 fois et l'on ajoute de 0,03 à 0,45 partie en poids de stéarate de zinc à titre d'agent facilitant l'expansion ou le moussage.

## Patentansprüche

1.  Verfahren zur Herstellung von offenporigen Polyäthylen-Schaummaterialien, wobei eine Ausgangsverbindung bestehend aus einer Basisverbindung aus Polyäthylen oder einem Kopolymer von Polyäthylen unter Beimischung eines Schaumbildungsmittels, insbesondere Azodikarbonamid, eines Reaktionsmittels wie z.B. Dikumylperoxid und wahlweise eines Schaumbildungsunterstützungsmittels unter Druck in einem ersten Schritt erhitzt wird, um ein erstes Zwischenprodukt zu bilden, das erste Zwischenprodukt dann in einem zweiten Schritt unter normalem Atmosphärendruck auf eine höhere Temperatur erhitzt wird, um ein zweites Zwischenprodukt zu bilden, welches ein Schaum mit geschlossenen Poren ist, und wobei dann die Porenwände des zweiten Zwischenprodukts durch mechanischen Druck aufgebrochen werden, um ein offenporiges Schaumprodukt zu bilden, dadurch gekennzeichnet, daß der erste Schritt des Erhitzens unter Druck bei einer Temperatur in einem Bereich mit der Untergrenze von 110°C durchgeführt wird, wobei aber 130°C nicht überschritten werden, wodurch ein weitgehendes Zersetzen des Schaumbildungsmittels verhindert wird, daß der zweite Schritt des Erhitzens unter Atmosphärendruck bei einer Temperatur im Bereich von 150°C bis 190°C durchgeführt wird, um ein weitgehend vollständiges Zersetzen des Schaumbildungsmittels zu erreichen, und daß ausreichend Schaumbildungsmittel, ggf. zusammen mit Schaumbildungsunterstützungsmittel, in der Ausgangsverbindung vorhanden ist, um insgesamt einen räumlichen Ausdehnungskoeffizienten von wenistens 25 zu erhalten, wobei vorgesehen ist, für einen Ausdehnungskoeffizienten über 45, daß kein Schaumbildungsunterstützungsmittel eingesetzt wird und daß bei einem Ausdehnungskoeffizienten zwischen 25 und 45 das zugefügte Schaumbildungsunterstützungsmittel (wie z.B. 0,01 bis 0,1 Gewichtsanteile bei Zinkoxid oder 0,03 bis 0,45 Gewichtsanteile bei Zinkstearat) nicht dazu ausreicht, eine Ausdehnung von mehr als dem 1,0- bis 2,0-fachen während des ersten Schritts des Erhitzens unter Druck zu bewirken, wodurch im wesentlichen 100% offene Poren im Schaumprodukt erzielt werden.

2. Verfahren nach Anspruch 1, dadurch gekennzeichnet, daß zur Ausgangsverbindung ein Anteil von Harzpulver mit einem hohen Schmelzpunkt von wenigstens 140°C hinzugefügt wird, sodaß dieses nicht schmilzt, bevor der zweite Schritt des Erhitzens bei höherer Temperatur unter Atmosphärendruck erreicht ist.

3. Verfahren nach Anspruch 2, dadurch gekennzeichnet, daß das Harzpulver mit hohem Schmelzpunkt in einer Menge von 5 - 30 Gewichtsanteilen zu 100 Gewichtsanteilen der Polyäthylen- oder Polyäthylenkopolymer-Basisverbindung hinzugefügt wird.

4. Verfahren nach Anspruch 1, 2 oder 3, dadurch gekennzeichnet, daß zur Ausgangsverbindung eine anorganische Füllsubstanz hinzugefügt wird.

5. Verfahren nach Anspruch 4, dadurch gekennzeichnet, daß die Menge der anorganischen Füllsubstanz 5 - 30 Gewichtsanteile ist, vorzugsweise 10 - 20 Gewichtsanteile.

6. Verfahren nach einem der vorhergehenden Ansprüche, dadurch gekennzeichnet, daß der räumliche Ausdehnungskoeffizient im Bereich von 25 - 45 liegt, und daß 0,01 bis 0,1 Gewichtsanteile Zinkoxid als Schaumbildungsunterstützungsmittel hinzugefügt werden.

7. Verfahren nach einem der Ansprüche 1 bis 5, dadurch gekennzeichnet, daß der räumliche Ausdehnungskoeffizient im Bereich von 25 - 45 liegt, und daß 0,03 bis 0,45 Gewichtsanteile Zinkstearat als Schaumbildungsunterstützungsmittel hinzugefügt werden.